# EUROPÄISCHE PATENTSCHRIFT

(11) **EP 2 198 503 B1**
(45) Veröffentlichungstag und Bekanntmachung des Hinweises auf die Patenterteilung: **24.02.2016**
(21) Anmeldenummer: 08760187.8
(22) Anmeldetag: 29.05.2008
(51) Int. Cl.: H02K 49/06, H02K 7/106, H02K 49/10

(54) **KUPPLUNGSVORRICHTUNG ZUR DREHMOMENTÜBERTRAGUNG UND VERFAHREN ZUR DREHMOMENTÜBERTRAGUNG MIT EINER DERARTIGEN KUPPLUNGSVORRICHTUNG**
CLUTCH DEVICE FOR THE TRANSMISSION OF TORQUE, AND METHOD FOR THE TRANSMISSION OF TORQUE USING SUCH A CLUTCH DEVICE
DISPOSITIF D'ACCOUPLEMENT POUR LE TRANSFERT DE COUPLES DE ROTATION ET PROCEDE DE TRANSFERT DE COUPLES DE ROTATION DOTE D'UN TEL DISPOSITIF D'ACCOUPLEMENT

(30) Priorität: 17.07.2007 DE 102007033676
(43) Veröffentlichungstag der Anmeldung: 23.06.2010
(73) Patentinhaber: Pierburg GmbH, 41460 Neuss (DE)
(72) Erfinder: GENSTER, Albert, 45768 Marl (DE); BURGER, Andreas, 47803 Krefeld (DE); SCHUESSLER, Gerd, 63785 Obernburg (DE); PEDALL, Stefan, 63791 Karlstein am main (DE); PROKOPP, Michael, 67549 Worms (DE)
(74) Vertreter: Patentanwälte ter Smitten Eberlein Rütten Partnerschaftsgesellschaft
(86) Internationale Anmeldenummer: PCT/EP2008/056596
(87) Internationale Veröffentlichungsnummer: WO 2009/010333

(56) Entgegenhaltungen:
- WO-A-2005/113944
- DE-A1- 3 905 216
- DE-A1-102004 057 848
- JP-A- 10 150 762
- US-A- 5 523 636

## Beschreibung

Die Erfindung betrifft eine Kupplungsvorrichtung zur Drehmomentübertragung mit einem antreibbaren Rotorteil, mit einer Abtriebswelle, die drehfest mit einem Ankerteil verbunden ist, an dem ein Hystereseteil befestigt ist, mit Permanentmagneten, die ein magnetisches Feld erzeugen, über dass ein Drehmoment vom Rotorteil auf das Ankerteil übertragbar ist, und mit einem Statorteil, in dem ein Elektromagnet angeordnet ist, mittels dessen in dem Rotorteil ein magnetischer Fluss induzierbar ist, der zur Einstellung eines Drehmomentes vom Rotorteil auf das Ankerteil dient. Des Weiteren betrifft die Erfindung ein Verfahren zur Drehmomentübertragung auf ein Nebenaggregat eines Fahrzeugs mit einer derartigen Kupplungsvorrichtung.

Derartige Kupplungsvorrichtungen sind in verschiedenen Ausführungsformen bekannt. Der wesentliche Vorteil besteht in der berührungslosen Drehmomentübertragung über den Luftspalt zwischen dem Hystereseteil und dem Rotorteil. Die Arbeitsweise beruht auf der Wirkung sich aufbauender magnetischer Felder und sich anziehender Pole im Synchronbetrieb bzw. der ständigen Ummagnetisierung des sich an den Magneten vorbei bewegenden Hystereseteils im Schlupfbetrieb.

So ist aus der DE 39 05 216 A1 eine elektrisch steuerbare Hysteresekupplung bekannt, die für Zugkraftregelungen bei Wickelvorgängen eingesetzt wird. Diese Hysteresekupplung dient zur Kopplung einer Antriebswelle mit einer koaxial dazu liegenden Abtriebswelle. Auf der Antriebswelle ist ein Ankerteil mit einem daran angeschlossenen Hystereseteil befestigt, welches mit einem Rotorteil, in dem Magnete angeordnet sind, korrespondiert. Die Kraftwirkung der Magnete lässt sich über eine fest in einem Gehäuse angeordnete Spule verstellen, wodurch der Schlupf der Hysteresekupplung und somit die Drehzahl der Abtriebswelle gegenüber der Antriebswelle verstellt werden kann. Die Permanentmagnete sind bei dieser Ausführung radial beidseits eines in einer Axialnut berührungslos umlaufenden Hystereseringes angeordnet.

Nachteilig an einer derartigen Ausführung ist es jedoch, dass auch bei Abschalten der an der Spule anliegenden Spannung weiterhin durch die Permanentmagnete ein Drehmoment von der Antriebswelle auf die Abtriebswelle übertragen wird. Auch bei negativer Bestromung der Spule kann dieses Moment nicht vollständig eliminiert werden.

In der DE 10 2004 057 848 A1 wird ebenfalls eine einstellbare Hysteresekupplung beschrieben, welche insbesondere zum Antrieb von Nebenaggregaten eines Fahrzeuges dient. Bei dieser Ausführung wird ein Rotorteil angetrieben, welches einen Spalt aufweist, in welchen ein Hysteresering reicht, der an einem fest auf einer Abtriebswelle angeordneten Ankerteil befestigt ist. Über eine Spule wird nun ein magnetisches Feld erzeugt, welches für ein ständiges Umpolen des Hystereseringes bei Antrieb des Rotorteils sorgt, so dass die Kupplung im Schlupfbetrieb läuft. Um nun beispielsweise bei Antrieb einer Kühlmittelpumpe auch ein Drehen der Abtriebswelle bei Stromausfall sicherzustellen, wird im Stator hinter der Spule zusätzlich ein Permanentmagnet angeordnet, der ebenfalls ein elektromagnetisches Feld erzeugt, welches auf das Hystereseteil wirkt. Dies führt jedoch dazu, dass es wiederum nicht möglich ist, beispielsweise bei Kaltstart einer Verbrennungskraftmaschine, die Förderung durch die Pumpe vollständig aufzuheben, also keine Drehzahl zu übertragen. Neben dieser permanentmagnetischen Fail-Safe-Sicherung wird auch eine mechanische Fail-Safe-Sicherung über eine Reibkupplung beschrieben.

Nachteilig ist jedoch bei beiden beschriebenen Ausführungen, dass entweder ein Anlaufen der Abtriebswelle bei beginnender Bewegung des Rotorteils nicht zu verhindern ist oder eine Drehmomentübertragung bei Stromausfall nicht sichergestellt wird.

Es ist daher Aufgabe der Erfindung, eine Kupplungsvorrichtung bereitzustellen, die über einen möglichst großen Bereich regelbar ist und die einerseits bei Stromausfall eine konstante Drehmomentübertragung sicherstellt und andererseits in der Lage ist gleichzeitig eine Drehmomentübertragung nach vorangegangenem Stillstand des Rotorteils vollständig zu unterbinden. Des Weiteren soll ein Verfahren bereitgestellt werden, mit dem eine derartige Kupplungsvorrichtung betreiben werden kann.

Diese Aufgabe wird dadurch gelöst, dass zwischen dem Statorteil und dem Ankerteil eine Synchronkupplung angeordnet ist, die radial innerhalb einer ersten Lagereinheit angeordnet ist, über die das Rotorteil auf dem Statorteil gelagert ist. Derartige Synchronkupplungen übertragen Drehmomente über magnetische Kräfte, die zwischen periodisch angeordneten gegenüberliegenden Permanentmagneten erzeugt werden. Beim Überschreiten eines Nennmomentes einer derartigen Synchronkupplung reißen die magnetischen Kräfte fast vollständig ab, so dass die Kupplung durchrutscht und nur noch ein sehr geringes Restmoment überträgt. Durch die Anordnung einer derartigen Synchronkupplung zwischen dem Statorteil und dem Ankerteil wird es möglich, diese Synchronkupplung als Bremse nach dem Stillstand des Rotorteils zu verwenden. Hierzu ist es notwendig, die Spule mit negativem Strom zu beaufschlagen, bevor eine Bewegung des Rotorteils erfolgt. Das sich hierdurch abbauende auf das Hystereseteil wirkende magnetische Feld der Permanentmagneten ist somit nicht größer als das Haltemoment der Synchronkupplung, so dass erst nach Über schreiten eines gewissen Nennmomentes durch entsprechende Bestromung des Elektromagneten eine Bewegung des Ankerteils und somit der Abtriebswelle erfolgt. Ohne Verwendung einer derartigen Synchronkupplung könnte die Krafteinwirkung der Permanentmagnete im Rotorteil durch die Spule nicht vollständig aufgehoben werden, da hierzu eine unendlich große negative Spannung notwendig wäre.

In einer vorteilhaften Ausgestaltung der Erfindung besteht die Synchronkupplung aus einem inneren Ring mit mehreren Permanentmagneten, der am Ankerteil befestigt ist und einem äußeren Teilring aus mehreren Permanentmagneten, der am Statorteil befestigt ist, wobei zwischen dem Ring und dem Teilring ein Luftspalt angeordnet ist. Am Statorteil weniger Magneten zu verwenden, verringert das Haltemoment der Synchronkupplung auf einen gewünschten Wert, der abhängig ist von der anzulegenden definierten negativen Spannung am Elektromagneten. Gleichzeitig wird durch die Anordnung der Magnete als Teilring am Statorteil ein deutlich ruhigerer Lauf der Kupplungsvorrichtung bei sich drehender Abtriebswelle erreicht, da die Rastmomente im Betrieb verringert werden, wobei eine Unwucht durch das Anordnen des Teilrings am Statorteil vermieden wird.

In einer vorteilhaften weiterführenden Ausführungsform ist das Hystereseteil als radial flacher Ring ausgebildet, dessen erstes axiales Ende am Ankerteil befestigt ist und dessen zweites axiales Ende in einen Spalt im antreibbaren Rotorteil ragt, wobei das Rotorteil an den radial zum Spalt gegenüberliegenden Seiten als weichmagnetisches Zahnprofil ausgeführt ist, in dessen Zwischenräumen jeweils die Permanentmagnete befestigt sind. Durch eine derartige Ausführung ergeben sich sehr geringe Schlupfverluste bei der Drehmomentübertragung zwischen Rotorteil und Ankerteil bei nicht bestromter Spule.

In einer weiteren vorteilhaften Ausführungsform ist das Rotorteil über einen Riementrieb antreibbar, und drehbar über die erste Lagereinheit auf dem Statorteil gelagert, wobei die erste Lagereinheit axial innerhalb der Ausdehnung einer Riemenschreibe des Rotorteils angeordnet ist. Dies führt zu einem gleichmäßigen Lauf der Abtriebswelle im Betrieb, da keine Biegemomente durch die Umschlingung des Riementriebes auf die Abtriebswelle wirken.

In einer hierzu wiederum weiterführenden Ausführungsform ist die Abtriebswelle drehbar über eine zweite Lagereinheit innerhalb des Statorteil gelagert, wobei die zweite Lagereinheit zumindest teilweise axial innerhalb der Ausdehnung der ersten Lagereinheit angeordnet ist. Auch dies führt zu einem gleichmäßig runden Lauf der Abtriebswelle und verringert zusätzlich den notwendigen axialen Bauraum.

Vorteilhafterweise dient die Kupplungsvorrichtung zur Drehmomentübertragung auf ein Nebenaggregat, insbesondere eine Kühlmittelpumpe eines Kraftfahrzeuges. Bei Verwendung einer derartigen Kupplungsvorrichtung für eine Kühlmittelpumpe ist es möglich, nach Kaltstart des Verbrennungsmotors über die Synchronkupplung eine Drehzahlübertragung zwischen Rotorteil und Abtriebswelle zu verhindern, was zu einer schnelleren Aufheizung des Verbrennungsmotors nach dem Kaltstart führt. Zusätzlich ist eine Förderung der Kühlmittelpumpe bei Ausfall der Stromversorgung der Spule sichergestellt.

Die Aufgabe, ein Verfahren für den Antrieb eines derartigen Nebenaggregates zu schaffen, welches einen Stillstand der Pumpe nach Kaltstart sicherstellt, wird durch ein Verfahren gelöst, bei dem bei Stillstand des Rotorteils die Spule mit einer definierten negativen Spannung beaufschlagt wird, durch welche das im Hystereseteil durch die Permanentmagnete erzeugte magnetische Feld bei folgender Drehung des Rotorteils derart geschwächt wird, dass das gesamte im Hystereseteil erzeugte Drehmoment durch die Haltekraft der Synchronkupplung ausgeglichen wird. Bei korrekter Auslegung der Haltekraft der Synchronkupplung und dem entstehenden Drehmoment zwischen Rotorteil und Ankerteil und somit einer korrekt ausgelegten auf die Spule zu gebenden negativen Spannung ist es somit mit einem derartigen Verfahren möglich, bei Kaltstart eines Verbrennungsmotors die Kühlmittelpumpe nicht mitlaufen zu lassen, was zu einer schnelleren Aufheizung der Verbrennungskraftmaschine führt.

In einem hierzu weiterführenden Verfahren wird bei Erhöhung der Spannung in Richtung des positiven Bereiches das Haltemoment der Synchronkupplung überschritten, so dass ein Drehmoment über das Hystereseteil auf das Ankerteil übertragen wird, so dass durch die folgende Drehung des Ankerteils das Haltemoment der Synchronkupplung abreißt. Somit kann die Pumpe fördern, ohne dabei ständig gegen eine vorhandene Haltekraft arbeiten zu müssen, so dass im Vergleich zu anderen Bremsen bei Verwendung einer Hysteresekupplung mit Elektromagnet deutlich Strom eingespart werden kann.

Des Weiteren wird bei nicht bestromter Spule ein Drehmoment durch die Permanentmagnete auf das Ankerteil übertragen, wodurch die Abtriebswelle mit einem konstanten Drehmoment angetrieben wird. Somit liegt bei Ausfall der Stromversorgung der Spule dennoch ein Betrieb der Kühlmittelpumpe mit einer aus diesem Drehmoment resultierenden Drehzahl für diese Pumpe vor. Dies führt dazu, dass bei Ausfall der elektrischen Versorgungsspannung der Verbrennungsmotor mit reduzierter Leistung weiter betrieben werden kann, ohne dass eine Überhitzung folgt, so dass der Fahrer eines Kraftfahrzeuges in der Lage wäre, die nächste Werkstatt aufzusuchen.

Es wird somit eine Kupplungsvorrichtung sowie ein Verfahren zur Drehmomentübertragung mittels einer derartigen Kupplungsvorrichtung vorgestellt, mittels derer sowohl ein Halten der Abtriebswelle nach Stillstand des Rotorteils möglich ist als auch eine Übertragung eines Drehmomentes bei Ausfall der Spule ermöglicht wird. Im Übrigen wird eine regelbare Kupplungsvorrichtung geschaffen, welche robust ist, eine hohe Lebensdauer aufweist und einen geringen Bauraum benötigt.

Ein Ausführungsbeispiel ist in den Figuren dargestellt und wird nachfolgend beschrieben.
Figur 1 zeigt eine Seitenansicht einer erfindungsgemäßen Kupplungsvorrichtung zur Drehmomentübertragung in geschnittener Darstellung.
Figur 2 zeigt eine perspektivische Ansicht der erfindungsgemäßen Kupplungsvorrichtung aus Figur 1 in teilweise aufgeschnittener Darstellung.

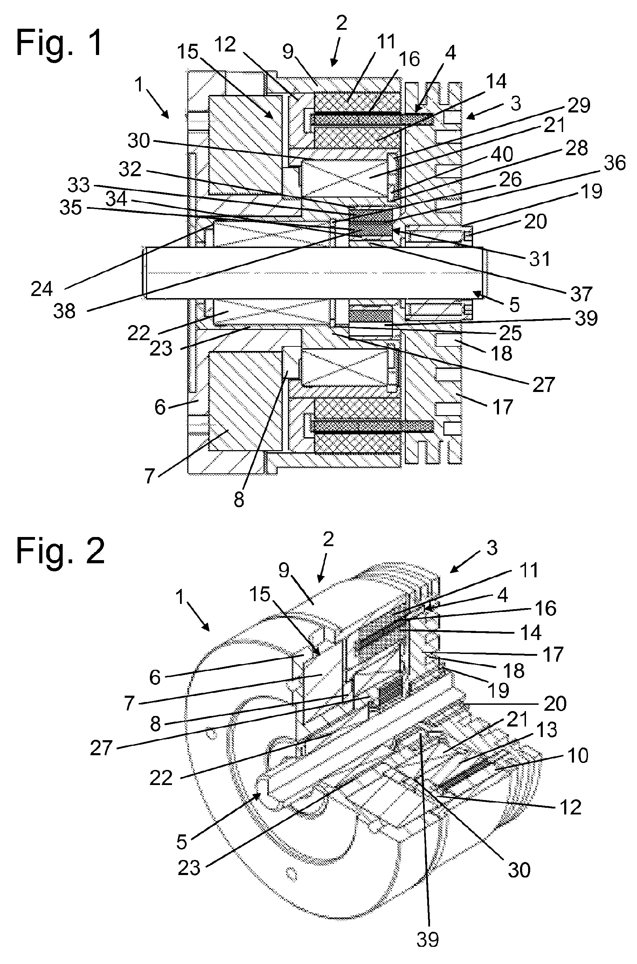

Die Figuren 1 und 2 zeigen eine erfindungsgemäße Kupplungsvorrichtung, die im Wesentlichen aus einem Statorteil 1, einem Rotorteil 2, einem Ankerteil 3 mit einem Hystereseteil 4 sowie einer Abtriebswelle 5 besteht.

Das Statorteil 1 weist ein Spulengehäuse 6 auf, welches eine Spule 7 axial sowie radial innen und außen begrenzt. An der axial offenen Seite des Spulengehäuses 6 ist ein Spulengehäusedeckel 8 angeordnet, der die Spule 7 im Spulengehäuse 6 fixiert. Sowohl das Spulengehäuse 6, wie auch der Spulengehäusedeckel 8 sind weichmagnetische Bauteile.

An das Statorteil 1 schließt sich in axialer Richtung das Rotorteil 2 an, welches aus einer Riemenscheibe 9 sowie einem radial innen liegenden Außenring 10 aufgebaut ist, welche über eine Presspassung miteinander verbunden sind. Der Außenring 10 weist ein radial nach innen gerichtetes Zahnprofil auf, in dessen Zwischenräumen Permanentmagneten 11 gleichmäßig über den Umfang verteilt angeordnet sind. Selbstverständlich können Riemenscheibe 9 und Außenring 10 auch einstückig sein.

Der Außenring 10 ist mit einem Distanzring 12 beispielsweise durch Schweißen verbunden. Dieser Distanzring 12 besteht aus einem nicht magnetischen Material und dient zur Verbindung des Außenringes 10 mit einem Innenring 13, der wie der Außenring 10 aus einem weichmagnetischen Material besteht. Der Distanzring 12 ist an der zur Spule 7 weisenden axialen Seite des Rotorteils 2 angeordnet und ist auch mit dem Innenring 13 beispielsweise durch Schweißen fest verbunden.

Der Innenring 13 wiederum weist ein radial nach außen weisendes Zahnprofil auf, in dessen Zwischenräumen wiederum Permanentmagnete 14 angeordnet sind. Im vorliegenden Ausführungsbeispiel sind auch am Innenring 13 eine zum Außenring entsprechende Anzahl an Permanentmagneten gleichmäßig über den Umfang verteilt.

Die Spule 7 bildet mit ihren Spulengehäuseteilen 6 und 8 sowie dem weichmagnetischen Außenring 10 und dem weichmagnetischen Ring 13 einen Elektromagneten 15.

Radial zwischen dem Außenring 10 und dem innenring 13 bzw. den Permanentmagneten 11 und 14 befindet sich ein Spalt 16, in den das Hystereseteil 4, welches in vorliegender Ausführungsform als flacher Ring ausgebildet ist, unter Beibehaltung eines Luftspaltes zum Innenring 13 und zum Außenring 10 ragt. Zur Vermeidung elektromagnetischer Verluste muss dieser Luftspalt möglichst klein ausgeführt werden.

Das Hystereseteil 4 ragt somit axial in das Rotorteil 2, wobei das entgegen gesetzte axiale Ende des Hystereseteils 4 im Ankerteil 3 befestigt ist. Dieses Ankerteil 3 besteht im Wesentlichen aus einer Scheibe 17 mit Kühlrippen 18 zur Verbesserung der Wärmeabfuhr. Diese Scheibe 17 ist über eine Spannhülse 19 mit Madenschrauben 20 auf der Abtriebswelle 5 befestigt. Auch eine Befestigung über einen Presssitz ist selbstverständlich realisierbar.

Die Lagerung des Rotorteils 2 bzw. der Abtriebswelle 5 erfolgt über eine erste Lagereinheit 21 zur Lagerung des Rotorteils 2 sowie eine zweite Lagereinheit 22 zur Lagerung der Abtriebswelle 5.

Die zweite Lagereinheit 22 befindet sich somit zwischen der Abtriebswelle 5 und einer Lagerbuchse 23, welche fest mit dem Spulengehäuse 6 verbunden ist und somit Teil des feststehenden Statorteils 1 ist. An dieser Lagerbuchse 23 ist ein Absatz 24 sowie eine Nut 25 ausgebildet, in der ein Sicherungsring 26 angeordnet ist, so dass die zweite Lagereinheit 22 bzw. deren Außenring in der Lagerbuchse 23 axial fixiert ist. Die Lagerbuchse 23 weist einen Abschnitt 27 größeren Außendurchmessers auf, der sich axial an das Spulengehäuse 6 anschließt, wobei sich auf diesem Abschnitt 27 die erste Lagereinheit 21 zur Lagerung des Rotorteils 2 angeordnet ist. Diese erste Lagereinheit 21 wird bezüglich ihres nicht dargestellten Innenringes durch den Spulengehäusedeckel 8 bzw. an der axial entgegen gesetzten Seite durch einen weiteren Sicherungsring 40 fixiert, der in einer Nut 28 der Lagerbuchse 23 angeordnet ist. Der äußere Ring dieser ersten Lagereinheit 21 wird durch einen weiteren Sicherungsring 29 sowie einen entsprechend ausgeformten Absatz 30 am Innenring 13 fixiert. Das Rotorteil 2 ist somit über seinen Innenring 13 auf der Lagereinheit 21 gelagert.

Erfindungsgemäß weist die Kupplungsvorrichtung nun zusätzlich eine Synchronkupplung 31 auf, die aus einer ersten Hülse 32, an deren Innenumfang Permanentmagnete 33 angeordnet sind sowie einer zweiten Hülse 34 besteht, an deren Außenumfang Permanentmagnete 35 angeordnet sind. Zwischen den Permanentmagneten 33, 35 befindet sich ein Spalt 36. Die äußere erste Hülse 32 ist fest an der radial innen liegenden Seite der Lagerbuchse 23 des Statorteils 1 fixiert, während die zweite radial innen liegende Hülse 34 fest auf einem Fortsatz 37 des Ankerteils 3 angeordnet ist. Dieser Fortsatz erstreckt sich axial von der Scheibe 17 in Richtung zum Statorteil 1. Dies bedeutet, dass die Permanentmagnete 33, welche fest in der Hülse 32 angeordnet sind, nicht bewegbar im statischen Teil der Kupplungsvorrichtung angeordnet sind, während die Permanentmagnete 35 sich mit der zweiten Hülse 34 bei Bewegung des Ankerteils 3 mitdrehen.

Die Magnete 33 der Synchronkupplung 31 bilden im Gegensatz zu den innen liegenden Permanentmagneten 35 keinen Ring 38 mit gleichmäßigen Abständen zwischen den Permanentmagneten, sondern lediglich einen äußeren Teilring 39. Im vorliegenden Ausführungsbeispiel besteht der innere sich mitdrehende Ring 38 aus zehn Magneten 35, welche gleichmäßig über die 360° verteilt sind. Der äußere Teilring 39 hingegen erstreckt sich lediglich über 144° und besteht aus fünf gleichmäßig über die 144° verteilten Magneten 33. Dies führt zu einer Verringerung der Haltekraft der als Bremse wirkenden Synchronkupplung und einem deutlich geräuschloseren Lauf bei Betrieb der Abtriebswelle 5. Um eine Unwucht zu vermeiden, ist der Teilring 39 am statischen Teil der Synchronkupplung 31 ausgebildet.

Im Folgenden wird die Funktionsweise der Kupplungsvorrichtung bei Verwendung als Antrieb einer Kühlwasserpumpe in einem Verbrennungsmotor beschrieben.

Bei einem Kaltstart des Verbrennungsmotors ist es gewünscht, dass die Kühlwasserpumpe kein Kühlwasser fördert. Entsprechend darf kein Drehmoment vom Rotorteil 2 auf die Abtriebswelle 5 übertragen werden. Dies geschieht, indem vor dem Start des Verbrennungsmotors und somit vor Anlauf des Rotorteils 2, die Spule 7 mit einer definierten negativen Spannung beaufschlagt wird, wodurch die Wirkung der Permanentmagnete 11, 14 auf das Hystereseteil 4 über die Zähne des Innenringes 13 bzw. des Außenringes 10 deutlich verringert wird.

Um auf diese Art und Weise vollständig eine Drehmomentübertragung zu verhindern, wäre es notwendig, die Spule 7 mit einer unendlich großen negativen Spannung zu beaufschlagen. Da dies nicht möglich ist, wird die negative Spannung, mit der die Spule 7 beaufschlagt wird, auf einen festgelegten Wert begrenzt. Um dennoch ein Mitdrehen des Ankerteils 3 mit dem Rotorteil 2 nach dem Start des Verbrennungsmotors zu verhindern, wird durch die Synchronkupplung 31 ein Haltemoment aufgebracht, welches zumindest so groß ist wie das Restdrehmoment, welches auf das Ankerteil 3 wirkt. Dieses Haltemoment wird durch die Permanentmagnete 33, 35 und deren Anziehungskraft im Stillstand aufgebracht.

Sobald die Kaltstartphase des Verbrennungsmotors beendet ist und somit eine Grenztemperatur des Kühlwassers erreicht ist, muss die Kühlmittelpumpe fördern. Hierzu wird die anliegende Spannung an der Spule 7 erhöht, wodurch das auf das Ankerteil wirkende Drehmoment erhöht wird und schließlich das Haltemoment der Synchronkupplung 31 übersteigt. Dies hat zur Folge, dass durch die folgende Drehung des Ankerteils 3 die Haltekraft der Synchronkupplung 31 abreißt, so dass nun durch das Vorbeilaufen der Permanentmagnete 11, 14 bzw. der Zähne des Innenund des Außenringes 13, 10 am Hystereseteil 4 eine ständige Ummagnetisierung im Hystereseteil 4 erfolgt und ein Drehmoment übertragen wird, ohne dass eine größere bremsende Wirkung durch die Synchronkupplung 31 vorhanden wäre. Wie groß der hierbei entstehende Schlupf ist, ist abhängig von der an die Spule 7 angelegten Spannung. Dies bedeutet, dass die Drehzahl des Ankerteils 3 und somit der Abtriebswelle 5 durch Änderung der an der Spule 7 anliegenden Spannung bis hin zu einer Maximaldrehzahl, bei der kein Schlupf auftritt, geregelt werden kann.

Die bei der bedarfsgerechten Kühlung benötigte Antriebsleistung zuzüglich der auftretenden Schlupfverluste ist dabei wesentlich geringer als die bei einer ungeregelten Pumpe aufzubringende Antriebsleistung. Ein weiterer Vorteil dieser Bauweise ist es, dass bei Ausfall der elektrischen Stromversorgung für die Spule 7 weiterhin ein magnetisches Feld durch die Permanentmagnete 11, 14 auf das Hystereseteil 4 wirkt, was zur Übertragung eines reduzierten Drehmomentes ausreicht. In einem derartigen Fall läuft somit die Kühlwasserpumpe mit einem festgelegten Drehmoment, so dass der Führer eines Kraftfahrzeuges keine Überhitzung des Verbrennungsmotors befürchten muss.

Es wird auch ersichtlich, dass durch die Anordnung der Lagereinheiten 21, 22 sowohl ein Rundlauf der Abtriebswelle 5 bzw. des Rotorteils 2 und des Ankerteils 3 gewährleistet wird als auch der axiale Bauraum weitestgehend minimiert werden. Eine derartig aufgebaute Kupplungsvorrichtung ermöglicht somit eine verlustarme Anpassung der Kühlmittelförderung an den jeweiligen Betriebszustand eines Verbrennungsmotors.

Es sollte deutlich sein, dass gewisse konstruktive Änderung vorgenommen werden können, wobei erfindungsgemäß die Funktionsweisen der Hysteresekupplung und der Synchronkupplung erhalten bleiben sollten.

## Patentansprüche

1. Kupplungsvorrichtung zur Drehmomentübertragung mit einem antreibbaren Rotorteil (2), mit einer Abtriebswelle (5), die drehfest mit einem Ankerteil (3) verbunden ist, an dem ein Hystereseteil (4) befestigt ist, mit Permanentmagneten (11, 14) die ein magnetisches Feld erzeugen, über dass ein Drehmoment vom Rotorteil (2) auf das Ankerteil (3)
übertragbar ist, und mit einem Statorteil (1), in dem ein Elektromagnet (15) angeordnet ist, mittels dessen in dem Rotorteil (2) ein magnetischer Fluss induzierbar ist, der zur Einstellung eines Drehmomentes vom Rotorteil (2) auf das Ankerteil (3) dient,
**dadurch gekennzeichnet, dass**
zwischen dem Statorteil (1) und dem Ankerteil (3) eine Synchronkupplung (31) angeordnet ist, die radial innerhalb einer ersten Lagereinheit (21) angeordnet ist, über die das Rotorteil (2) auf dem Statorteil (1) gelagert ist.

2. Kupplungsvorrichtung zur Drehmomentübertragung nach Anspruch 1, **dadurch gekennzeichnet, dass** die Synchronkupplung (31) aus einem inneren Ring (38) mit mehreren Permanentmagneten (35) besteht, der am Ankerteil (3) befestigt ist und einem äußeren Teilring (39) aus mehreren Permanentmagneten (33) besteht, der am Statorteil (1) befestigt ist, wobei zwischen dem Ring (38) und dem Teilring (39) ein Luftspalt (36) angeordnet ist.

3. Kupplungsvorrichtung zur Drehmomentübertragung nach einem der Ansprüche 1 oder 2, **dadurch gekennzeichnet, dass** das Hystereseteil (4) als radial flacher Ring ausgebildet ist, dessen erstes axiales Ende am Ankerteil (3) befestigt ist und dessen zweites axiales Ende in einen Spalt (16) im antreibbaren Rotorteil (2) ragt, wobei das Rotorteil (2) an den radial zum Spalt (16) gegenüberliegenden Seiten als weichmagnetisches Zahnprofil ausgeführt ist, in dessen Zwischenräumen jeweils die Permanentmagnete (11, 14) befestigt sind.

4. Kupplungsvorrichtung zur Drehmomentübertragung nach einem der vorhergehenden Ansprüche, **dadurch gekennzeichnet, dass** das Rotorteil (2) über einen Riementrieb antreibbar ist, wobei die erste Lagereinheit (21) axial innerhalb der Ausdehnung einer Riemenscheibe (9) des Rotorteils (2) angeordnet ist.

5. Kupplungsvorrichtung zur Drehmomentübertragung nach einem der vorhergehenden Ansprüche, **dadurch gekennzeichnet, dass** die Abtriebswelle (5) drehbar über eine zweite Lagereinheit (22) innerhalb des Statorteils (1) gelagert ist, wobei die zweite Lagereinheit (22) zumindest teilweise axial innerhalb der Ausdehnung der ersten Lagereinheit (21) angeordnet ist.

6. Kupplungsvorrichtung zur Drehmomentübertragung nach einem der vorhergehenden Ansprüche, **dadurch gekennzeichnet, dass** die Kupplungsvorrichtung zur Drehmomentübertragung auf ein Nebenaggregat, insbesondere eine Kühlmittelpumpe eines Kraftfahrzeuges dient.

7. Verfahren zur Drehmomentübertragung mit einer Kupplungsvorrichtung nach einem der vorhergehenden Ansprüche, **dadurch gekennzeichnet, dass** bei Stillstand des Rotorteils (2) die Spule (7) mit einer definierten negativen Spannung beaufschlagt wird, durch welche das im Hystereseteil (4) durch die Permanentmagnete (11, 14) erzeugte magnetische Feld bei folgender Drehung des Rotorteils (2) derart geschwächt wird, dass das gesamte im Hystereseteil (4) erzeugte Drehmoment durch die Haltekraft der Synchronkupplung (31) ausgeglichen wird.

8. Verfahren zur Drehmomentübertragung nach Anspruch 7, **dadurch gekennzeichnet, dass** bei Erhöhung der Spannung in Richtung des positiven Bereiches das Haltemoment der Synchronkupplung (31) überschritten wird, so dass ein Drehmoment über das Hystereseteil (4) auf das Ankerteil (3) übertragen wird, so dass durch die folgende Drehung des Ankerteils (3) das Haltemoment der Synchronkupplung (31) abreißt.

9. Verfahren zur Drehmomentübertragung nach einem der Ansprüche 7 oder 8, **dadurch gekennzeichnet, dass** bei nicht bestromter Spule (7) ein Drehmoment durch die Permanentmagnete (11, 14) auf das Ankerteil (3) übertragen wird, wodurch die Abtriebswelle (5) mit einer festen Drehzahl angetrieben wird.

## Claims

1. A coupling device for the transmission of torque, comprising
a drivable rotor part (2),
an output shaft (5),
which is connected for rotation with an armature part (3)
to which a hysteresis part (4) is mounted,
permanent magnets (11, 14)
which generate a magnetic field
through which a torque can be transmitted from the rotor part (2) to the armature part (3),
and a stator part (1)
in which an electromagnet (15) is arranged,
by means of which a magnetic flux can be induced into the rotor part (2)
which flux serves to adjust a torque from the rotor part (2) to the armature part (3),
**characterized in that**
a synchronous coupling (31) is arranged between the stator part (1) and the armature part (3), which coupling is arranged radially within a first bearing unit (21) by which the rotor part (2) is supported on the stator part (1).

2. The coupling means for the transmission of torque of claim 1, **characterized in that** the synchronous coupling (31) is formed by an inner ring (38) with a plurality of permanent magnets (35), which ring is fastened to the armature part (3), and by an outer partial ring (39) of a plurality of permanent magnets (33), which is fastened to the stator part (1), an air gap (36) being provided between the ring (38) and the partial ring (39).

3. The coupling means for the transmission of torque of one of claims 1 or 2, **characterized in that** the hysteresis part (4) is formed as a radially flat ring whose first axial end is fastened to the armature part (3) and whose second axial end extends into a gap (16) in the drivable rotor part (2), the rotor part (2) being formed as a soft magnetic toothed profile on the sides radially opposite the gap (16), with the permanent magnets (11, 14) being respectively fastened in the interstices of the profile.

4. The coupling means for the transmission of torque of one of the preceding claims, **characterized in that** the rotor part (2) is drivable through a belt drive, the first bearing unit (21) being arranged axially within the dimensions of a pulley (9) of the rotor part (2).

5. The coupling means for the transmission of torque of one of the preceding claims, **characterized in that** the output shaft (5) is rotatably supported by a second bearing unit (22) within the stator part (1), the second bearing unit (22) being arranged at least partly axially within the dimensions of the first bearing unit (21).

6. The coupling means for the transmission of torque of one of the preceding claims, **characterized in that** the coupling device serves for the transmission of torque to an auxiliary aggregate, in particular a coolant pump of a motor vehicle.

7. A method for the transmission of torque using a coupling device of one of the preceding claims, **characterized in that** upon a standstill of the rotor part (2), a defined negative voltage is applied to the coil (7), by which voltage the magnetic field generated by the permanent magnets (11, 14) in the hysteresis part (4) is weakened when the rotor part (2) rotates thereafter, such that the entire torque generated in the hysteresis part (4) is cancelled by the holding force of the synchronous coupling (31).

8. A method for the transmission of torque of claim 7, **characterized in that** upon an increase in voltage towards the positive range, the holding moment of the synchronous coupling (31) is exceeded so that a torque is transmitted to the armature part (3) via the hysteresis part (4) so that a subsequent rotating of the armature part (3) breaks the holding moment of the synchronous coupling (31).

9. A method for the transmission of torque of one of claims 7 or 8, **characterized in that**, if the coil (7) is not energized, a torque is transmitted to the armature part (3) by the permanent magnets (11, 14), whereby the output shaft (5) is driven at a fixed number of rotations.

## Revendications

1. Dispositif d'accouplement pour le transfert de couples de rotation avec
un élément de rotor (2) qui peut être entrainé,
un arbre de sortie (5),
qui est solidaire en rotation d'un élément d'armature (3) auquel est monté un élément à hystérésis (4),
des aimants permanents (11, 14) générant un champ magnétique
par lequel un couple de rotation peut être transféré à partir de l'élément de rotor (2) à l'élément d'armature (3),
et avec un élément de stator (1)
dans lequel est disposé un électro-aimant (15)
par lequel un flux magnétique peut être induit dans l'élément de rotor (2)
qui sert à ajuster un couple de rotation à partir dudit élément de rotor (2) à l'élément d'armature (3),
**caractérisé en ce qu'**
un accouplement synchrone (31) est disposé entre ledit élément de stator (1) et ledit élément d'armature (3), l'accouplement synchrone étant disposé radialement à l'intérieur d'une première unité de palier (21) par laquelle ledit élément de rotor (2) est supporté sur ledit élément de stator (1).

2. Dispositif d'accouplement pour le transfert de couples de rotation selon la revendication 1, **caractérisé en ce que** l'accouplement synchrone (31) est formé d'un anneau interne (38) avec plusieurs aimants permanents (35), ledit anneau interne étant fixé sur ledit élément d'armature (3), et d'un anneau partiel externe (39) constitué par plusieurs aimants permanents (33), ledit anneau externe étant fixé sur ledit élément de stator (1), un entrefer (36) étant formé entre ledit anneau (38) et ledit anneau partiel (39).

3. Dispositif d'accouplement pour le transfert de couples de rotation selon l'une des revendications 1 ou 2, **caractérisé en ce que** l'élément à hystérésis (4) est en forme d'un anneau radialement plat, dont la première extrémité axiale est fixée sur l'élément d'armature (3) et dont la deuxième extrémité axiale s'étend dans une fente (16) dans ledit élément de rotor (2) qui peut être entrainé, ledit élément de rotor (2) est réalisé sous forme d'un profil dentelé magnétique doux sur les côtés radialement opposées à la fente (16), les aimants permanents (11, 14) étant chacun fixés dans les interstices du profil.

4. Dispositif d'accouplement pour le transfert de couples de rotation selon l'une quelconque des revendications précédentes, **caractérisé en ce que** ledit élément de rotor (2) peut être entraîné par une transmission par courroie, la première unité de palier (21) étant disposée axialement à l'intérieur des dimensions d'une poulie (9) dudit élément de rotor (2).

5. Dispositif d'accouplement pour le transfert de couples de rotation selon l'une quelconque des revendications précédentes, **caractérisé en ce que**, par une deuxième unité de palier (22), l'arbre de sortie (5) est supporté de manière rotative dans ledit élément de stator (1), ladite unité de palier (22) étant au moins partiellement disposée axialement dans les dimensions de la première unité de palier (21).

6. Dispositif d'accouplement pour le transfert de couples de rotation selon l'une quelconque des revendications précédentes, **caractérisé en ce que** le dispositif d'accouplement sert à transférer des couples de rotation À un agrégat secondaire, particulièrement une pompe d'agent de refroidissement d'un véhicule automobile.

7. Procédé de transfert de couples de rotation avec un dispositif d'accouplement selon l'une quelconque des revendications précédentes, **caractérisé en ce que**, lors d'un arrêt dudit élément de rotor (7) est alimenté en une tension négative définie par laquelle le champs magnétique, généré par les aimants permanents (11, 14) dans l'élément à hystérésis (4), est affaibli, lors de la rotation suivante dudit élément de rotor (2), de sorte que tout le couple généré dans ledit élément à hystérésis (4) est compensé par la farce de retenue dudit accouplement synchrone (31).

8. Procédé de transfert de couples de rotation selon la revendication 7, **caractérisé en ce que** lors d'une augmentation de la tension vers la plage positive, le moment de retenue dudit accouplement synchrone (31) est dépassé de sorte qu'un couple de rotation est transféré à l'élément d'armature (3) à travers l'élément à hystérésis (4), de sorte que la rotation suivante dudit élément d'armature (3) cause la coupure du moment de retenue dudit accouplement synchrone (31).

9. Procédé de transfert de couples de rotation selon l'une des revendications 7 ou 8, **caractérisé en ce que**, si la bobine (7) n'est pas alimentée, un couple de rotation est transféré sur l'élément d'armature (3) par les aimants permanents (11, 14), de sorte que l'arbre de sortie (5) est entraîné avec une vitesse fixe.
